# EUROPÄISCHE PATENTANMELDUNG

(11) **EP 1 659 764 A1**
(43) Veröffentlichungstag der Anmeldung: **24.05.2006**
(21) Anmeldenummer: 04027535.6
(22) Anmeldetag: 19.11.2004
(51) Int. Cl.: H04M 1/02, E05D 1/02, G06F 1/16

(54) **Zusammenklappbares schwenkgelenkloses Gerät der Informations- oder Kommunikationstechnik**

(71) Anmelder: SIEMENS AKTIENGESELLSCHAFT, 80333 München (DE)
(72) Erfinder: Patzelt, Klaus, 85238 Petershausen (DE)

(57) **Zusammenfassung**

Gemäß der vorliegenden Erfindung weist ein Gerät der Informations- oder Kommunikationstechnik mindestens 2 Gehäuseteile (G1, G2) auf, die über ein System von Bändern (B1, B2, B3) derart miteinander mechanisch verbunden sind, dass durch eine Veränderung der räumlichen Ausrichtung der Gehäuseteile relativ zueinander und in Abhängigkeit von der jeweiligen momentanen Ausrichtung jeweils unterschiedliche Oberflächen (S1, S2, S3, S4) der Gehäuseteile von außen zugänglich oder sichtbar werden, wogegen andere Oberflächen derselben Gehäuseteile sich gegenseitig verdecken.

## Beschreibung

Heutige Mobiltelefone und andere Geräte der Informations-oder Kommunikationstechnik, wie z.B. so genannte Notebooks oder so genannte Personal Digital Assistants (PDAs) weisen häufig Formen auf, bei denen zwei oder mehr Gehäuseteile durch einen oder mehrere Klappmechanismen miteinander verbunden sind. Diese Gehäuseanordnungen erfreuen sich am Markt zunehmender Beliebtheit und es besteht daher ein Bedürfnis, die Mechanismen mit dem Ziel verbesserter Bedienbarkeit technisch weiterzuentwickeln.

Gemäß der vorliegenden Erfindung weist ein Gerät der Informations- oder Kommunikationstechnik mindestens 2 Gehäuseteile (G1, G2) auf, die über ein System von Bändern (B1, B2, B3) derart miteinander mechanisch verbunden sind, dass durch eine Veränderung der räumlichen Ausrichtung der Gehäuseteile relativ zueinander und in Abhängigkeit von der jeweiligen momentanen Ausrichtung jeweils unterschiedliche Oberflächen (S1, S2, S3, S4) der Gehäuseteile von außen zugänglich oder sichtbar werden, wogegen andere Oberflächen derselben Gehäuseteile sich gegenseitig verdecken.

Diese erfindungsgemäße Konstruktionsweise ermöglicht eine Gehäusegestaltung, bei der es möglich ist, z.B. zwei handgroße plattenförmige Gehäuseteile eines integralen Gerätes um 360 Grad oder mehr gegeneinander zu drehen. Mechanische und deshalb häufig insbesondere gegen Stöße und andere äußere Einflüsse empfindliche Gelenke werden bei der erfindungsgemäßen Konstruktionsweise vermieden.

Gemäß einer Weiterentwicklung der vorliegenden Erfindung ist es vorgesehen, dass zumindest einige Bänder Signalleitungen aufweisen, über die die Gehäuseteile auch informations- oder kommunikationstechnisch miteinander verbunden sind. Auf diese Weise können die Gehäuseteile des Gerätes auf einfache und wenig störanfällige Weise miteinander elektrisch verbunden werden, wobei eine Führung elektrischer Verbindungen über Gelenke, welche aus Kostengründen oft aus Kunststoff mit minimalen Metallanteilen gefertigt werden, vermieden werden kann.

Besonders vorteilhaft erscheint eine Anordnung der Bänder des erfindungsgemäßen Gerätes, bei der mindestens ein Band in wenigstens einer bestimmten räumlichen Ausrichtung der Gehäuseteile relativ zueinander mindestens eine Oberfläche eines Gehäuseteils nur teilweise verdeckt. Auf diese Weise können unterschiedliche Anwendungen des erfindungsgemäßen Gerätes in unterschiedlichen räumlichen Ausrichtungen der Gehäuseteile in besonderer Weise durch partielle Abdeckung von Oberflächenteilen, die z.B. Displays oder Tastaturen tragen, unterstützt werden.

Die Erfindung wird im folgenden anhand von Figuren und vorteilhaften Ausführungsbeispielen näher beschrieben.

Dabei zeigen

Figuren 1, 2, 3 und 4 Seitenansichten eines Ausführungsbeispiels der Erfindung in verschiedenen Phasen der Klappbewegung in schematischer Weise;

Figuren 5, 6 und 7.schematisch dargestellte Ansichten eines Ausführungsbeispiels der Erfindung in verschiedenen Phasen der Klappbewegung von oben bzw. unten gesehen.

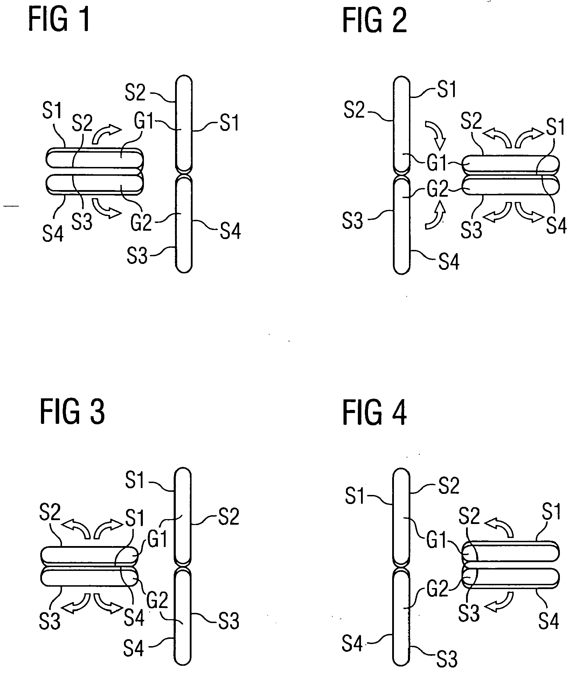

In diesem Ausführungsbeispiel der vorliegenden Erfindung besteht das gerät aus zwei Gehäuseteilen G1 und G2 die miteinander über eine System aus drei Bändern B1, B2 und B3 verbunden sind. In einer in Figur 1 gezeigten räumlichen Ausrichtung der Gehäuseteile verlaufen die Bänder B1 und B3 parallel zu einander und durch einen Zwischenraum, der Platz für das Band B2 bietet, voneinander getrennt vom linken Ende des Gehäuseteils G1 über die Oberfläche S1 über das rechte Ende des Gehäuseteils G1 bis zum rechten Ende des Gehäuseteils G2. Das Band B2 verläuft in dieser Phase des Klappvorgangs (bzw. Stellung des Klappmechanismus) vom linken Ende des Gehäuseteils G2 über die Oberfläche S4 über das rechte Ende des Gehäuseteils G2 bis zum rechten Ende des Gehäuseteils G1. Dabei verlaufen alle drei Bänder zueinander parallel über die Oberflächen S1 und S4 und kreuzen sich in der dritten Raumdimension am rechten Ende beider Gehäuseteile.

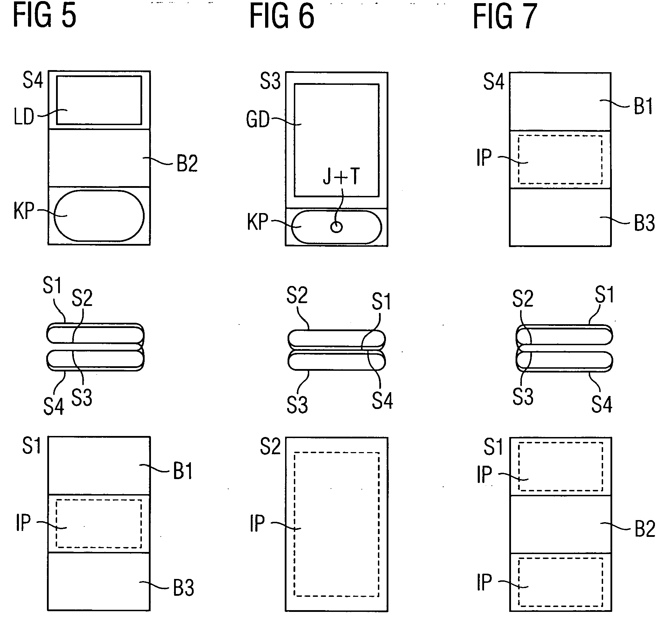

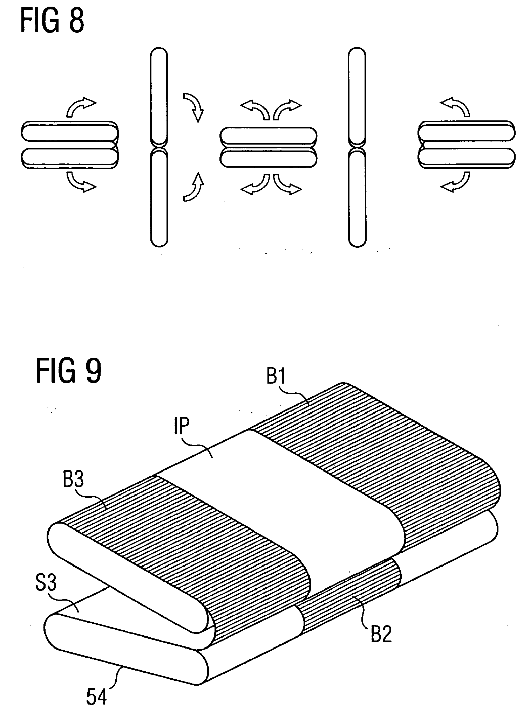

In dieser in Figur 5 gezeigten Stellung verdecken die Bänder B1 und B3 die oberen bzw. unteren Teile der Oberfläche S1 des Gehäuseteils G1, wogegen das Band B2 den mittleren Teil der Oberfläche S4 des Gehäuseteils G2 verdeckt. Auf den unverdeckten oberen bzw. unteren Oberflächenteilen der Oberfläche S4 ist in unserem Beispiel eine kleine monochrome LCD-Anzeige (LD) angebracht, die besonders zur Anzeige von kürzeren Texten oder Statusmeldungen des Gerätes geeignet ist bzw. ein Tastenblock (KP), z.B. ein Ziffernblock zur Eingabe von Rufnummern, Befehlen und eventuell auch Kurznachrichten. Auf dem mittleren Oberflächenteil der Oberfläche S1 des Gehäuseteils G1 ist in unserem Beispiel eine Freifläche (IP) vorgesehen, die vom Hersteller z.B. zur Anbringung von Schmuckflächen oder Verzierungen aber auch zur Anbringung weiterer Kontrollelemente, Tasten, Anzeigen, Kameras, Mikrofonen oder ähnlichem verwendet werden kann.

Durch eine Drehung beider Gehäuseteile G1 bzw. G2 gegeneinander um 90 Grad wird das Gerät in eine gestreckte Anordnung überführt, in der die Gehäuseoberflächen S1 und S4 nicht mehr - wie zuvor in der Ausgangsposition - in entgegen gesetzte Richtung weisen, sondern in die gleiche Richtung (hier nach rechts). Ebenso weisen die Oberflächen S2 und S3 nun in die gleiche Richtung, nämlich nach links, wogegen sie sich vorher gegenseitig verdeckten.

Bringt der Hersteller des Gerätes auf der Freifläche IP der Oberfläche S1 z.B. eine Kamera an, dann könnte das vorzugsweise große, hoch auflösende, helle und farbige Display (GD) auf der Oberfläche S3 in dieser Position als Monitor dieser Kamera dienen. Ebenso könnte dieser Monitor aber auch auf der Freifläche IP der Oberfläche S2 angebracht sein.

Bereits nach dieser kurzen Beschreibung wird deutlich, wie reich an Anwendungs- und Ausgestaltungsmöglichkeiten die erfindungsgemäße Konstruktionsweise ist. Es würde den Rahmen dieser Beschreibung mit Sicherheit sprengen, auch nur den Versuch zu unternehmen, die zahlreichen Möglichkeiten hier annähernd darstellen zu wollen. Dies ist aber auch nicht nötig, denn dem Fachmann erschließt sich die Vielfalt dieser Möglichkeiten leicht anhand der grundsätzlichen Schilderung der erfindungsgemäßen Konstruktion.

Die beschriebenen Ausführungsbeispiele sollen die grundsätzlichen Möglichkeiten der Erfindung erläutern, die in zahlreichen Varianten ausgestaltet werden kann. So können anstelle von nur zwei Gehäuseteilen und drei Bändern auch mehrere Gehäuseteile und bzw. oder mehrere Bänder in ähnlicher Weise zu einer Gerätekonstruktion verwendet werden. Einige Bänder - z.B. B1 und B3 - können dabei fest sein, und somit die Verbindungen stabilisieren, andere Bänder wie z.B. B2 könnten elastisch ausgeführt werden. Eine wesentlicher Punkt der Erfindung ist die Verwendung von Bändern als Gelenke an Geräten aus mehreren Gehäuseteilen, um verschiedene, den jeweiligen Aufgaben angepasste, optimale Oberflächen zu ermöglichen.

Die Bänder erlauben dabei mehr Freiheit bei der Gestaltung des Gerätes. So entsteht durch das schnelle und einfache Umklappen rasch eine vollkommen andere Oberfläche, die von einem Designer für ein anderes Aufgabengebiet entsprechend gestaltet werden kann. Schließlich trägt die erfinderische Konstruktion selbst zu einem attraktiven, interessanten und neuartigen Erscheinungsbild der entsprechend konstruierten Geräte bei.

Die Erfindung ermöglicht außerdem eine signifikante Gewichtsersparnis bei der Konstruktion mehrteiliger Gehäuse von Kleingeräten wie Mobiltelefonen, Notebooks oder PDAs durch die Umgehung aufwendiger Gelenk- oder Scharnierkonstruktionen durch die erfindungsgemäßen Bänder, was nach den Erfahrungen der letzten Jahre ein bedeutender Faktor für den Markterfolg solcher Geräte sein kann.

## Patentansprüche

1. Gerät der Informations- oder Kommunikationstechnik
mit mindestens 2 Gehäuseteilen (G1, G2), die über ein System von Bändern (B1, B2, B3) derart miteinander mechanisch verbunden sind, dass durch eine Veränderung der räumlichen Ausrichtung der Gehäuseteile relativ zueinander und in Abhängigkeit von der jeweiligen momentanen Ausrichtung jeweils unterschiedliche Oberflächen (O1, 02, 03, 04) der Gehäuseteile von außen zugänglich oder sichtbar werden, wogegen andere Oberflächen derselben Gehäuseteile sich gegenseitig verdecken.

2. Gerät nach Anspruch 1,
bei dem zumindest einige Bänder Signalleitungen aufweisen, über die die Gehäuseteile auch informations- oder kommunikationstechnisch miteinander verbunden sind.

3. Gerät nach einem der vorhergehenden Ansprüche,
bei dem mindestens ein Band in wenigstens einer bestimmten räumlichen Ausrichtung der Gehäuseteile relativ zueinander mindestens eine Oberfläche eines Gehäuseteils nur teilweise verdeckt.
